# EUROPEAN PATENT APPLICATION

(11) **EP 2 977 565 A1**
(43) Date of publication of application: **27.01.2016**
(21) Application number: 14177834.0
(22) Date of filing: 21.07.2014
(51) Int. Cl.: F01D 25/16, F01D 25/28, F02C 7/20, F01D 25/12

(54) **A turbomachine arrangement**

(71) Applicant: Siemens Aktiengesellschaft, 80333 München (DE)
(72) Inventor: Singh, Paramdeep, 110058 Delhi (IN); Singh, Ranvijay, 110075 Gurgaon (IN)
(74) Representative: Patentanwaltskanzlei WILHELM & BECK

(57) **Abstract**

A turbomachine arrangement (1) for supporting at least a part (44) of a turbomachine on a foundation (6), the turbomachine arrangement (1) having a rotor bearing (2), a rotor bearing casing (3) for supporting the rotor bearing (2), a support member (5) having a casing end (8) and a foundation end (9), wherein the casing end (8) is connected to the rotor bearing casing (3), which transfers the load from the rotor bearing casing (3) to the foundation (6), it is suggested, that the foundation end (9) is connectable to the foundation (6).

## Description

The present invention relates to the field of turbomachines, and particularly to a turbomachine arrangement for supporting at least a part of a turbomachine for transferring a load from a rotor bearing casing of the turbomachine to a foundation whereon the turbomachine is supported.

A turbomachine is a rotary mechanical device that extracts energy from a flow of a fluid, and converts a mechanical energy of the fluid into electric power. The turbomachine in turn comprises a rotor whereon the fluid impinges during the operation thereof. A part of the rotor, especially a portion of a shaft of the rotor, is supported on a rotor bearing for the purpose of reduction of friction during the rotation of the rotor around its axis, which facilitates a desired motion of the rotor, i.e. a rotational motion. The rotor bearing is both supported and enclosed by a rotor bearing casing, which not only serves to protect the rotor bearing from exposure to foreign entities such as dust, but also serves to prevent the spillage of lubricants from the rotor bearing into other parts of the turbomachine. The rotor bearing casing is normally located at a transitional stage of a turbine section and an exhaust section of the turbomachine. An exhaust casing is circumferentially disposed on the rotor bearing casing, and the rotor bearing casing is further connected to the exhaust casing for the purpose of supporting the rotor bearing casing. A support member, such as a rod or a beam, connects the rotor bearing casing and the exhaust casing. Thus, during a non-operational condition of the turbomachine, the static load of the rotor bearing acts on the exhaust casing, via the support member.

During the operation of the turbomachine, wherein the turbomachine is configured to operate at thousands of revolutions per minute, the rotor is exposed to immense rotational forces, which are termed dynamic loads, and the forces act on the rotor bearing. The forces are also transmitted to the exhaust casing, because of a supporting connection that exists between the rotor bearing and the rotor bearing casing, as well as a supporting connection that exists between the rotor bearing casing and the exhaust casing. Thus, during an operational condition of the turbomachine, the dynamic loads which are experienced by the rotor bearing act on the exhaust casing. The dynamic forces can cause undesired vibrations of the rotor bearing, rotor bearing casing, and the exhaust casing. The undesired vibrations can have adverse effects on the turbomachine, such as reduction in the efficiency of the turbomachine, humming during the operation of the turbomachine, possibility of loosening and/or dislodgement of one or more components of the turbomachine due to constant vibrations, et cetera. Thus, the dynamic loads reduce the stability of the turbomachine.

Presently, the mass of the exhaust casing is extensively increased, in order to withstand both the static load and the dynamic loads of the rotor bearing and the rotor bearing casing, and to reduce the undesired vibrations experienced during the operation of the turbomachine. The addition of mass shifts the frequency as well as increases the stiffness of the axial exhaust casing. The increase in mass of the casing has many disadvantages, viz. increases the amount of material that is required for construction of the turbomachine, increases the production cost of the turbomachine, increases the difficulty of portability of the exhaust casing during transportation and assembly thereof, et cetera.

The object of the present invention is to provide a different design of a turbomachine arrangement, which enables the minimization of the transfer of stresses and loads from the rotor bearing to the exhaust casing.

The object of the invention is accomplished by a turbomachine arrangement, wherein a rotor bearing casing of a turbomachine is connected to one end of a support member, and wherein another end of the support member is in turn connectable to a foundation whereon the turbomachine is supported for transferring a load from the rotor bearing casing to the foundation.

According to the present invention a turbomachine arrangement for a turbomachine comprises a rotor bearing, a rotor bearing casing within which the rotor bearing is disposed and a support member. Herein, the support member has two ends, one end is attached to the rotor bearing casing and the second end is attached to the foundation. The support member transfers the load generated by the rotor to the foundation, whereby, decoupling any contact between the rotor bearing casing and the exhaust casing.

According to an embodiment of the invention, a portion of the exhaust casing lies between the rotor bearing casing and the foundation. The exhaust casing comprises of an opening through which the support member passes, whereby connecting the rotor bearing casing and the foundation. This arrangement decouples the rotor bearing casing from the exhaust casing thus, limiting the effect of the rotor during the operation of the turbomachine on the exhaust casing. By this arrangement the exhaust casing does not bear the load exerted by the rotor during the operation of the turbomachine, thus the need for the exhaust casing to be heavy and bulky is eliminated. Hence the manufacturing cost of the exhaust casing can be reduced.

According to yet another embodiment of the invention, elongated section of the support member connects the rotor bearing casing and the foundation. The support member transfers the load exerted by the rotor bearing casing to the foundation through the elongated section.

According to yet another embodiment of the invention, the support member has connecting means on both ends. The connecting means can be in the form of rivets, flanges et cetera. The connecting means connect the casing end to the rotor bearing casing and the foundation end to the foundation. Advantageously the connecting means help achieve a tight fit/coupling between the casing end and the rotor bearing casing and the foundation end and the foundation.

According to yet another embodiment of the invention, the support structure is monolithic. The monolithic configuration of the support member makes it strong and provides for a solid base for the rotor bearing casing.

According to yet another embodiment of the invention, the support member can further comprise of auxiliary support members. In one of the embodiments of the present invention the auxiliary support member surrounds the support member. The support member can be protected from foreign entities such as dust. In another configuration multiple support members are surrounded by an auxiliary support member. This provides multiple redundancies of support members and is beneficial if one of the support members is damaged during the operation of the turbomachine. In such a configuration, the remaining support members can still support the rotor bearing casing, and the connection between the rotor bearing casing and the foundation is still maintained. Furthermore, the rotor load can be equally distributed over the foundation with such a plural configuration of the support members.

According to yet another embodiment of the invention, the turbomachine arrangement can comprise of transverse support members which are connected to the rotor bearing casing an angle θ to the support member. During the operation of the turbomachine the rotor experiences immense dynamic loads. This can cause displacements in different directions, by supporting the rotor bearing casing from different locations, vertical, lateral and axial movements of the rotor bearing casing can be reduced. The transverse support members connect the rotor bearing casing to different parts of the foundation, this leads to the distribution of the loads at different regions of the foundation. The distribution of the load at different regions of the foundation prevents the load from getting concentrated on a single region of the foundation, whereby reducing the chances of the foundation getting damaged.

According to yet another embodiment of the invention, the support member comprises a cooling channel. A coolant fluid is dispensable into the cooling channel during an operation of the turbomachine for cooling the support members. This is beneficial in reducing the differential thermal expansion between the support member and exhaust casing. Therewith, any alignment issue in the vertical direction and malfunctioning arising out of overheating of the exhaust casing can be avoided as well.

The aforementioned and other embodiments of the present invention, which is related to a turbomachine arrangement, will now be addressed with reference to the accompanying drawings of the present invention. The illustrated embodiments are intended to illustrate, but not to limit the invention. The accompanying drawings herewith contain the following figures, in which like numbers refer to like parts, throughout the description and the drawings.
- FIG 1: depicts a front view of a section of a turbomachine comprising a turbomachine arrangement in accordance with one or more embodiments of the present invention,
- FIGs 2-6: depict various front views of various embodiments of a support member of the turbomachine arrangement referred to in FIG 1.

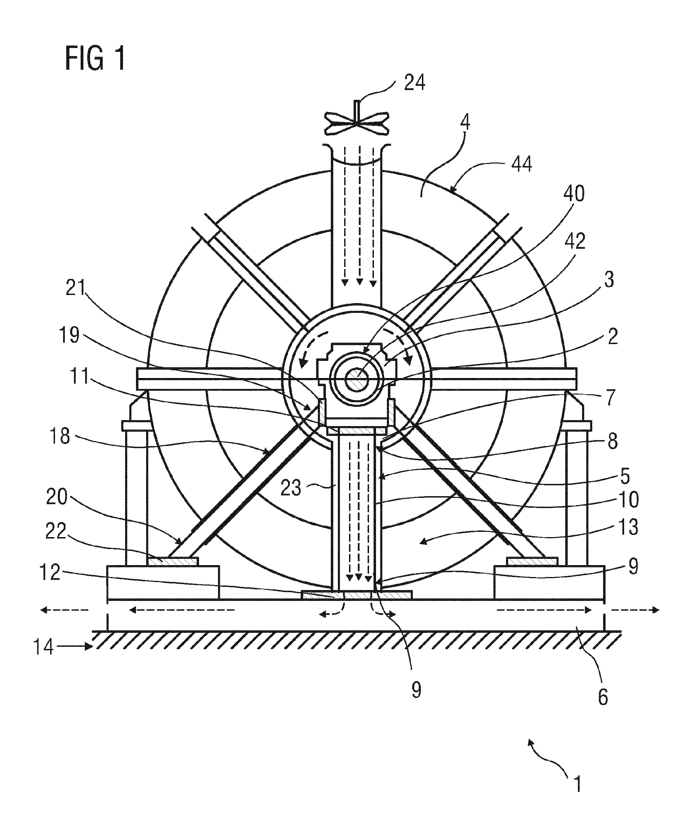

FIG 1 depicts a front view of a section of a part 44 of a turbomachine comprising a turbomachine arrangement 1 according to one or more embodiments of the present invention.

The aforementioned turbomachine (not depicted) can be a gas turbine, a steam turbine, a combined cycle power plant, et cetera, which is used in the field of power generation. The section of the turbomachine depicted therein is to be construed as an exhaust section of the turbomachine. However, the teachings of the present invention may be modified accordingly and applied to other similar sections of the turbomachine.

The turbomachine is supported on a foundation 6, and the turbomachine is also affixed to the foundation 6. The foundation 6 depicted therein is a metallic frame whereon the turbomachine is supported, and the metallic frame is in fact supported on the ground. However, without loss of generality, the foundation 6 can also be construed as the ground/a cemented floor, if the turbomachine is directly supported thereon.

The turbomachine essentially comprises a rotor 40, and the rotor 40 in turn comprises an axial shaft 42 and a plurality of blades (not depicted). A portion of the axial shaft 42 is supported on a rotor bearing 2 for the purpose of reducing friction experienced by the axial shaft 42 during an operation of the turbomachine, i.e. during the rotation of the axial shaft 42. The rotor bearing 2 is both supported and preferably enclosed by a rotor bearing casing 3. An exhaust casing 4 is circumferentially disposed around the rotor bearing casing 3, and the exhaust casing 4 essentially surrounds the rotor bearing casing 3. The exhaust casing 4 is to be construed as a part of an outer casing (not depicted) of the turbomachine, especially at the exhaust section of the turbomachine.

The rotor bearing 2 is a machine element that constrains relative motions and reduces friction between moving parts of the axial shaft 42 to only the desired motion, i.e. the rotational motion. The design of the rotor bearing 2 may, for example, provide for free linear movement of the axial shaft 42 for free rotation of the axial shaft 42 around an axis of rotation of the turbomachine. The design and functioning of the rotor bearing 2 are well-known in the art and is not elucidated herein for the purpose of brevity.

The rotor bearing casing 3 protects the rotor bearing 2 and also supports the rotor bearing 2. Rotor bearing casing 3 essentially encloses most of the parts of the rotor bearing 2. The rotor bearing casing 3 protects the rotor bearing 2 from dust, and the rotor bearing casing 3 further prevents lubricants present in the rotor bearing 2 from leaking out into other parts of the turbomachine. The design and functioning of the rotor bearing casing 3 are also well-known in the art and is not elucidated herein for the purpose of brevity.

In FIG 1, a support member 5 is provided to connect the rotor bearing casing 3 to the foundation 6, wherewith a rotor load is directly transferrable from the rotor bearing casing 3 to the foundation 6 via the support member 5. According to an aspect of the present invention, the support member 5 is essentially elongated and connects the rotor bearing casing 3 to the foundation 6, such that the rotor bearing casing 3 is supported on the foundation 6. During idle state of the turbomachine, the static load experienced by the rotor bearing 2 is transferred to the foundation 6 by means of the support member 5. The dimensions of the support member 5 and the material used for manufacturing the support member 5 are designed and selected based on the operating conditions of the turbomachine, and the magnitude of the loads (both static and dynamic loads) experienced by the rotor bearing 2.

In the turbomachine arrangement 1 depicted therein, a portion 13 of the exhaust casing 4 is arranged between the rotor bearing casing 3 and the foundation 6. The exhaust casing 4 is designed such that an opening 7 is provided in the portion 13 of the exhaust casing 4 present between the rotor bearing casing 3 and the foundation 6. Herein, the portion 13 can be construed to be located in a region, preferably in the lower half of the exhaust casing 4 wherein the opening 7 is present. The support member 5 extends from the rotor bearing casing 3 to the foundation 6 through the opening 7. The opening 7 can be provided by either removing a certain quantity of material from the exhaust casing 4 at a preferred location or by drilling the exhaust casing 4 at the preferred location or by other manufacturing means, such that the opening 7 is present at the preferred location. The opening 7 is dimensioned such that the support member 5 is capable of being inserted through the opening 7 for connecting the rotor bearing casing 3 and the foundation 6 through the opening 7 for the purpose of supporting the rotor bearing casing 3 on the foundation 6.

The turbomachine arrangement 1 of the present invention essentially comprises the rotor bearing 2, the rotor bearing casing 3, and the support member 5, as elucidated in the hereinabove paragraphs.

In the present invention, the support member 5 is essentially elongated and comprises two ends, viz. a casing end 8 and a foundation end 9. The casing end 8 is connected to the rotor bearing casing 3, and the foundation end 9 is connected to the foundation 6. The support member 5 comprises an elongated section 10, and the elongated section 10 extends between the casing end 8 and the foundation end 9. According to an aspect of the present invention, the entire support member 5 can be monolithic, i.e. the casing end 8, the elongated section 10, and the foundation end 9 are manufactured as an integrated unit, and such a monolithic support member 5 can be manufactured either by casting, forging, electric discharge machining, or laser sintering techniques.

The casing end 8 comprises a casing connecting means 11, and the casing connecting means 11 facilitates a connection between the support member 5 and the rotor bearing casing 3. Similarly, the foundation end 9 comprises a foundation connecting means 12, and the foundation connecting means 12 facilitates a connection between the support member 5 and the foundation 6. Therewith, the rotor bearing casing 3 is connected to the foundation 6 and supported thereon by means of the support member 5.

According to an exemplary aspect, each of the aforementioned connecting means, i.e. casing connecting means 11 and/of the foundation connecting means 12, can be realised by means of flanges and tie bolts. For example, in the casing connecting means 11, the casing end 8 is provided with a flange comprising at least one hole, and the rotor bearing casing 3 is also provided with a corresponding hole. A tie bolt can be inserted through the hole in the rotor bearing casing 3 and also through the hole in the flange, and the tie bolt can be tightened, thereby connecting the rotor bearing casing 3 to the support member 5. The tie bolt can be further tightened to achieve a tight fit between the rotor bearing casing 3 and the support member 5. A similar flange, hole and a tie bolt arrangement can be realised for connecting the support member 5 to the foundation 6 using the foundation connecting means 12. Thus, the rotor bearing casing 3 is connected to the foundation 6.

According to other aspects of the present invention, the aforementioned casing connecting means 11 and/or the foundation connecting means 12 can also be realised by other means such as screws, rivets, or welding, et cetera, for the purpose of connecting the rotor bearing casing 3 to the support member 5, and for connecting the support member 5 to the foundation 6.

By means of connecting the support member 5 to the rotor bearing casing 3 using the casing connecting means 11, a load of the rotor 40, i.e. static load and/or dynamic load of the rotor bearing 2, is transferrable to the support member 5. Additionally, by means of connecting the support member 5 to the foundation 6 using the foundation connecting means 12, the aforementioned load is further transferrable to the foundation 6. Thus, the load experienced by the rotor bearing 2 is directly transferrable to the foundation 6. Therewith, the load experienced by the rotor bearing 2 is not required to be transferred to the exhaust casing 4, thereby decoupling direct mechanical contact between the exhaust casing 4 and the rotor bearing casing 3.

During the operation of the turbomachine, wherein the axial shaft 42 is subjected to thousands of rotations per minute, the rotor 40 also experiences immense dynamic loads. The dynamic loads tend to cause displacements of the rotor bearing 2 and the rotor bearing casing 3 in different directions, i.e. in vertical, axial and radial directions. In the embodiment depicted in FIG 1, the turbomachine arrangement 1 is also provided with one or more transverse support members 18 for reducing the displacements of the rotor bearing 2 and the rotor bearing casing 3.

Each transverse support member 18 further comprises a transverse casing end 19 and a transverse foundation end 20. The transverse support member 18 also extends radially from the rotor bearing casing 3 towards a different region of the foundation 6. The transverse casing end 19 is connected to the rotor bearing casing 3 by the transverse casing connecting means 21. Similarly, the transverse foundation end 20 is connected to the foundation 6 by the transverse foundation connecting means 22. The exhaust casing 4 is also provided with one or more transverse openings, wherewith the one or more transverse support members extend for the purpose of connecting the rotor bearing casing 3 to the foundation 6. Herein, the transverse foundation connecting means 22 and/or the transverse casing connecting means 21 can also be realised using a flange, hole and a tie bolt arrangement that is similar to the aforementioned casing connecting means 11 and/or the foundation connecting means 12 respectively.

Each transverse support member 18 is arranged at an angle ø with respect to the support member 5, and is therefore connected to a different region on the foundation 6. Thus, by connecting different parts of the rotor bearing casing 3 to different regions on the foundation 6, it is possible to reduce lateral and axial movements. Furthermore, it is possible to distribute the load of the rotor bearing casing 3 on to different regions of the foundation 6.

The profile of each transverse support member 18 can be identical to the profile of the support member 5. Furthermore, the dimensions of the support member 5, the number of transverse support members 18, and the material used for manufacturing the transverse support member 18 are designed and selected based on the operating conditions of the turbomachine, and the magnitude of the loads (both static and dynamic loads) experienced by the rotor bearing 2.

In the embodiment depicted in FIG 1, the support member 5 also comprises a channel 23, and the channel 23 extends between the casing end 8 and the foundation end 9. A cooling means in the form of a cooling fan 24 is provided and arranged for blowing air into the channel 23 for the purpose of cooling the support member 5 and/or the rotor bearing casing 3. The cooling means 24 may also be realised by dispensing a coolant fluid into the channel 23 for the purpose of cooling the support member 5 and/or the rotor bearing casing 3 during the operation of the turbomachine. According to another aspect, the cooling means can also be achieved by allowing ambient air to circulate through the channel 23.

The cooling channels 23 can also be extended into the foundation 6 of the turbomachine, and appropriate arrangements can be provided in the foundation 6, by means of which the coolant fluid may be dispensed into the support member 5 and/or the transverse support member 18. It may be noted herein that transverse support members 18 can also be provided with additional cooling channels (not depicted), whereto the aforementioned coolant fluid may be dispensed for the purpose of cooling the same during the operation of the turbomachine.

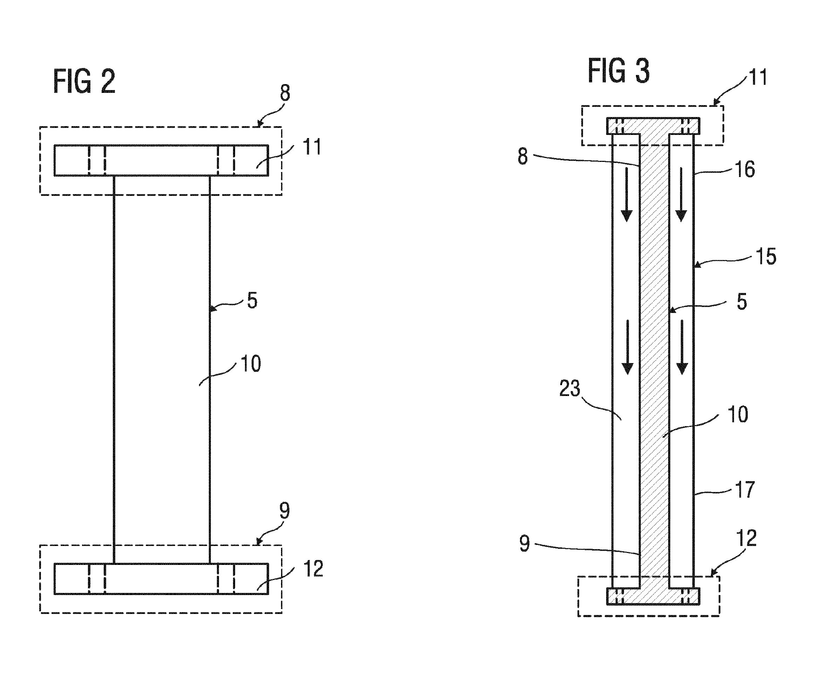

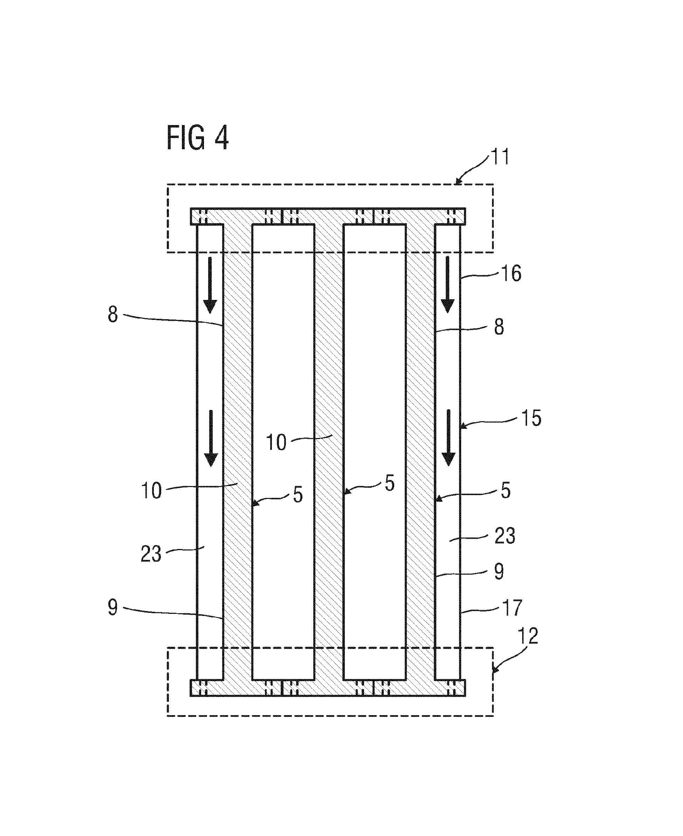

Different configurations of the support member 5 of the present invention are depicted in FIGs 4 through 8. FIG 1 is also referred to herein for the purpose of elucidation of FIGs 4 through 8.
The support member 5 depicted in FIG 2 is both cylindrical and hollow. A cross section of the support member 5 is circular. However, the support member 5 can also be realised as a hollow cuboid, hollow prism, or the like, wherein the cross section of such a support member 5 can be either, triangular, rectangular, et cetera. A wall thickness of such a support member 5 can again be designed and selected based on the operating conditions of the turbomachine, and the magnitude of the loads (both static and dynamic loads) experienced by the rotor bearing 2.

The support member 5 depicted in FIG 3 comprises an auxiliary support member 15. The auxiliary support member 15 is designed as a hollow sleeve for the support member 5 for the purpose of enclosing the support member 5. Herein, the auxiliary support member 15 has an auxiliary casing end 16 and auxiliary foundation end 17 which are on the same side as that of the casing end 8 and foundation end 9 of the support member 5 respectively. Thus, the support member 5 can be protected from foreign entities such as dust. Furthermore, a space between the auxiliary support member 15 and the support member 5 can act as a channel 23 whereto the coolant fluid may be dispensed for cooling the support member 5. The auxiliary support member 15 also extends from the rotor bearing casing 3 and towards the foundation 6 of the turbomachine.

In FIG 4, a plurality of support members 5, and an auxiliary support member 15 enclosing the plurality of support members 5 are depicted. Such a configuration provides multiple redundancies of support members 5 and is beneficial if one of the support members 5 is damaged during the operation of the turbomachine. In such a configuration, the remaining support members 5 can still support the rotor bearing casing 3, and the connection between the rotor bearing casing 3 and the foundation 6 is still maintained. In such a configuration, each support member 5 can be provided with an individual casing connecting means 11 at the respective casing ends 8 for connecting the rotor bearing casing 3 to the respective support member 5. Similarly, each support member 5 can also be provided with an individual foundation connecting means 12 at the respective foundation ends 9 for connecting the respective support member 5 to the foundation 6. Furthermore, the rotor load can be equally distributed over the foundation 6 with such a plural configuration of the support members 5.

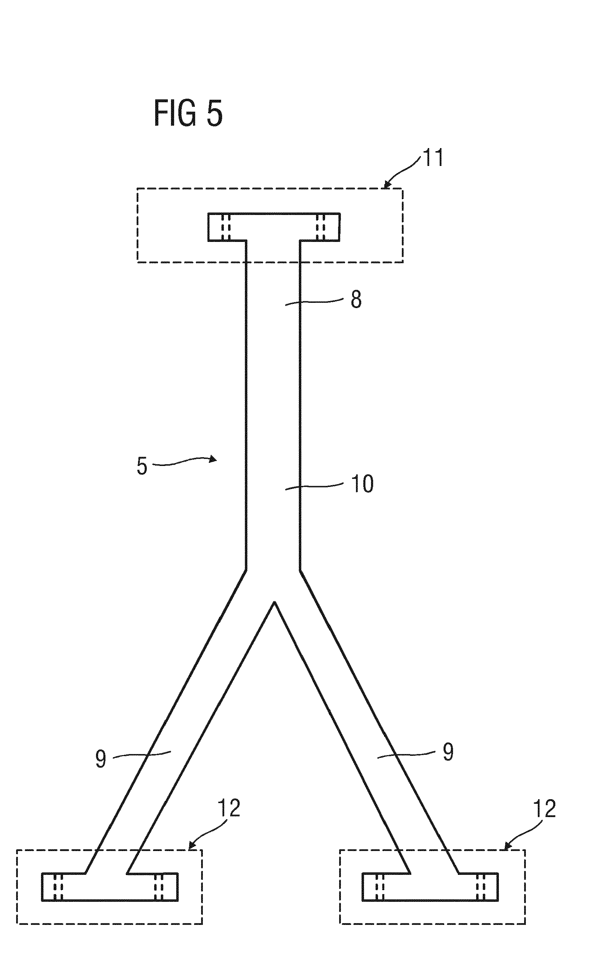

In FIG 5, the support member 5 comprising a multi-pronged foundation end 9 is depicted. In such a configuration, the rotor load can be transferred from the support member 5 to different regions of the foundation 6, because the support member 5 is connectable to multiple regions of the foundation 6. Furthermore, multiple foundation connecting means 12 can be provided for connecting such a multi-pronged foundation end 9 of the support member 5 to the foundation 6. Thus, the rotor load is transferable from the rotor bearing casing 3 and distributable over the foundation 6. Such a design of the support member 5 prevents the rotor load from being concentrated over a single region of the foundation 6, whereby reducing the chances of damage to the foundation 6.

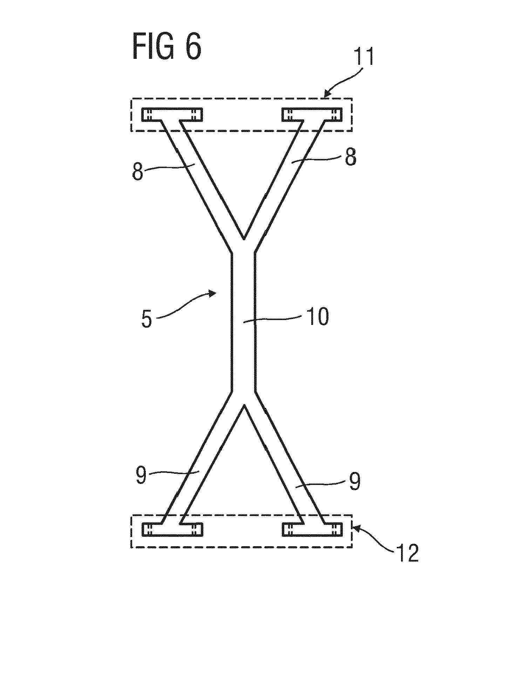

In FIG 6, the support member 5 comprising a multi-pronged casing end 8 and a multi-pronged foundation end 9 is depicted. In such a configuration, the support member 5 is connectable to different regions of the rotor bearing casing 3 and at two regions of the foundation 6. This configuration provides stability to the turbomachine arrangement 1. The vertical, lateral and axial movements of the rotor bearing casing 3 can be further reduced using such a configuration of the support member 5. The rotor load is equally transferable from two different regions of the rotor bearing casing 3 to the support member 5, and then distributable to two different regions of the foundation 6 by means of the configuration of the support member 5 depicted therein.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A turbomachine arrangement (1) for supporting at least a part (44) of the turbomachine on a foundation (6), the turbomachine arrangement (1) having:
- a rotor bearing (2),
- a rotor bearing casing (3) for supporting the rotor bearing (2),
- a support member (5) having a casing end (8) and a foundation end (9), wherein the casing end (8) is connected to the rotor bearing casing (3),
**characterized in that** the foundation end (9) is connectable to the foundation (6).

2. The turbomachine arrangement (1) according to claim 1, **characterized in that** the turbomachine arrangement (1) further comprises an exhaust casing (4), wherein at least a portion (13) of the exhaust casing is arranged between the rotor bearing casing (3) and the foundation (6).

3. The turbomachine arrangement (1) according to claim 2, **characterized in that** the portion (13) comprises an opening (7), and wherein the support member (5) extends through the opening (7).

4. The turbomachine arrangement (1) according to claims 1 to 3, **characterized in that** the support member (5) comprises an elongated section (10) extending between the casing end (8) and the foundation end (9).

5. The turbomachine arrangement (1) according to any of the claims 1 to 4, **characterized in that** the support member (5) further comprises:
- a casing connecting means (11) for connecting the casing end (8) to the rotor bearing casing (3), and
- a foundation connecting means (12) for connecting the foundation end (9) to the foundation (6).

6. The turbomachine arrangement (1) according to claim 5, **characterized in that** the casing connecting means (11) and/or the foundation connecting (12) means is a flange or a rivet.

7. The turbomachine arrangement (1) according to any of the claims 1 to 6, **characterized in that** the support member (5) is monolithic.

8. The turbomachine arrangement (1) according to any of the claims 1 to 7, **characterized in that** the support member (5) comprises at least one channel (23) arranged between the casing end (8) and the foundation end (9).

9. The turbomachine arrangement (1) according to claim 8, **characterized in that** the support member (5) further comprises one or more auxiliary support members (15).

10. The turbomachine arrangement (1) according to claim 9, **characterized in that** at least one of the auxiliary support members (15) is enclosed by the support member (5).

11. The turbomachine arrangement (1) according to claim 8 or claim 9, **characterized in that** each of the one or more auxiliary support members (15) and the support member (5) are parallel to each other, and wherein each of the one or more auxiliary support members (15) and the support member extend from the rotor bearing casing (3) towards the foundation (6).

12. The turbomachine arrangement (1) according to any of the claims 1 to 11, **characterized in that** the turbomachine arrangement (1) further comprises:
- a transverse support member (18) comprising a transverse casing end (19) and a transverse foundation end (20), wherein the transverse casing end (19) is connected to the rotor bearing casing (3), wherein the transverse foundation end (20) is connectable to the foundation (6), and wherein the transverse support member (18) is arranged at an angle (ø) to the support member (5).

13. The turbomachine arrangement (1) according to any of the claims 1 to 12, **characterized in that** the turbomachine arrangement (1) further comprises:
- a cooling means (24) for cooling the support member (5).
